Europäisches Patentamt

European Patent Office

Office européen des brevets

(19)

(11) Publication number: **0 045 166**
**B1**

(12) **EUROPEAN PATENT SPECIFICATION**

(45) Date of publication of patent specification: **11.04.84**

(51) Int. Cl.³: **F 16 C 33/04, F 16 C 9/04**

(21) Application number: **81303324.8**

(22) Date of filing: **21.07.81**

(54) **A sleeve bearing half-shell, a journalled bearing assembly comprising such half-shell and a method of forming the assembly.**

(30) Priority: **29.07.80 US 173291**

(43) Date of publication of application:
**03.02.82 Bulletin 82/5**

(45) Publication of the grant of the patent:
**11.04.84 Bulletin 84/15**

(84) Designated Contracting States:
**DE FR GB IT**

(56) References cited:
**FR - A - 844 628**
**FR - A - 2 266 820**
**US - A - 1 558 978**

(73) Proprietor: **FEDERAL-MOGUL CORPORATION**
**26555 Northwestern Highway**
**Southfield Michigan 48075 (US)**

(72) Inventor: **Matzelle, Albert J.**
**1623 Clark Lake Road**
**Brighton Michigan 48116 (US)**

(74) Representative: **Wisher, Michael Frederick et al,**
**Urquhart-Dykes & Lord 47 Marylebone Lane**
**London W1M 6DL (GB)**

Courier Press, Leamington Spa, England.

## A sleeve bearing half-shell, a journalled bearing assembly comprising such half-shell and a method of forming the assembly

This invention relates generally to a sleeve bearing adapted to have an oil film or layer between the bearing surface and a journalled member, and is particularly, but not essentially, applicable to half-shell sleeve bearings used in internal combustion engines in co-operation with crank shafts and connecting rods.

Sleeve bearings as aforedescribed generally have a cylindrical outer surface commonly called the bearing back which is disposed in a pocket such as at the end of a piston rod. Such sleeve bearings include an inner bearing surfaces in varying engagement with a journalled member such as a journalled portion of a crank shaft. The members forming the bearing pocket are in clamping engagement with the bearing back to apply radial forces to the bearing back and the bearing assembly is continually subjected to an oil supply for establishing a film of oil between the bearing surface and the journalled member.

The outer cylindrical surface defining the bearing back and the inner bearing surface in such sleeve bearings extend axially between opposite ends of the bearing and circumferentially 360° with the sleeve bearing generally being defined by two half-shells having parting faces in abutting engagement with one another. Because of the various procedures used to manufacture the bearing half-shells, the profile of the bearing back or outer cylindrical surface will be generally concave axially between opposite ends of the bearing. The amount of the concavity will vary from bearing to bearing as a result of such factors as the size of the bearing and the material thickness; however, the bearing back is basically always concave between the ends when the bearing is in the free state and when held to gauge diameter, i.e. not clamped in a bearing housing. Further, bearing half-shells prior to being inserted into a bearing pocket in their free state, have a greater diameter between the parting faces thereof than the bearing pocket diameter and, therefore, the parting faces of a bearing sleeve must be moved together when inserting the sleeve into a bearing pocket. It is a natural phenomenon that in so bending an elongated curved strip, the outside surface becomes concave between the side edges or, in the case of a bearing, the opposite ends. Further, the bearing backs normally include a very thin protective coating or plating, such as flash lead or tin.

Applicant has discovered that, when such prior art bearing sleeves are placed in a bearing housing and radial forces are applied thereto, the axially spaced end portions of the bearing back surface are under a greater seating force or pressure with the housing as a result of the concavity of the bearing back being straightened than are the circumferential central portions of the bearing back. Applicant has also discovered that some oil finds its way between the bearing back and the housing, as by capillary action. It has further been discovered that, as a result of the bearings constantly experiencing a change in strain during operating conditions (due to such factors as dynamic loads, and bearing housing distortion), the protective coatings on the bearing back rub free and flow to the areas of minimum back contact or minimum seating pressure between the bearing back and its housing. The oil between the bearing back and its housing also tends to move to these areas of minimum seating pressure and, therefore, cause a build-up of oil oxide and the bearing back protective coatings. This build-up of residue tends to result in premature bearing distress and failure.

According to the present invention there is provided a sleeve bearing half-shell of a generally semi-circular configuration and having an outer surface and an inner bearing surface adapted to engage a journalled member, said surfaces extending axially between laterally spaced opposite ends and circumferentially between oppositely disposed parting faces, the half-shell being characterised in that it is bowed in axial section between said ends with the bearing surface being concave and the outer surface being convex while in the free unstressed state. In the described embodiment of the present invention there is provided a sleeve bearing half-shell which is such that when it is associated with a journalled bearing assembly, the stresses thereon will be greater along the circumferential centre line than along the axially spaced circumferential ends whereby the seating pressure between the half-shell and the bearing housing is greater along the circumferential centre line of the back surface than along the portions of the back surface adjacent the ends. Thus, the surfaces of the half-shell respectively remain concave and convex until placed in the bearing housing and radial forces are applied thereto to force the concave and convex surfaces into a substantially straight configuration axially between the ends thereof. The advantage of this is that there is provided a sleeve bearing wherein a significant portion of the oil and any bearing back plating which is rubbed free continuously flow from the circumferential centre portion of the bearing back out of the ends of the bearing to reduce build-ups on the bearing back and greatly increase the bearing life.

Further according to the present invention there is provided a journalled bearing assembly comprising a shaft having a journalled portion, two half-shells defining a bearing sleeve disposed about the journalled portion with parting faces of one half-shell abutting parting faces of the other half-shell and inner bearing surfaces in engagement with the journalled portion, clamping means having a bearing pocket in engagement with outer surfaces of said half-shells and applying radial forces to the half-shells, the bearing assembly being characterised in that each half-shell is substantially as defined in the first sentence of the immediately preceding paragraph and in that the radial forces applied by the clamping means are such as to force the concave and convex surfaces of the half-shells into a substantially straight configuration axially between the ends thereof.

Still further according to the present invention there is provided a method of forming a journalled bearing assembly comprising the steps of forming two semi-circular half-shells each with an outer surface and an inner bearing surface with the surfaces extending axially between laterally spaced opposite ends and circumferentially between oppositely disposed parting faces, placing the half-shells together with the parting faces abutting to define a bearing sleeve in a bearing housing engaging the outer surfaces thereof, the method being characterised in that the two half-shells are each formed with the bearing surface being concave and the outer surface being convex between the ends while in the free unstressed state and in that radial forces are applied to the half-shells in the bearing housing to force the concave and convex surfaces into a substantially straight configuration axially between the ends thereof.

Preferably the concave and convex surfaces of the or each half-shell in accordance with the invention extend from parting face to parting face. Conveniently, the or each said half-shell extends about an axial centre with the terminal portions adjacent said parting faces being on a longer radius from said axial centre than the radius of the central portion between the parting faces while in the free unstressed state. Further the concave and convex surfaces are preferably such that they are respectively less concave and less convex (while remaining respectively concave and convex) when the terminal portions adjacent the parting faces are moved together to a position where the terminal portions are on a radius equal to the radius of the central and remaining portions. When held in a condition in which the said two radii are equal, the half-shell is referred to as being at its gauge diameter.

One embodiment of a sleeve bearing half-shell in accordance with the present invention will now be described by way of example only, with reference to the accompanying drawings, in which:

Figure 1 shows a journalled bearing assembly incorporating the sleeve bearing;

Figure 2 is an enlarged fragmentary cross-sectional view of the assembly of Figure 1;

Figure 3 is a cross-sectional view taken substantially along line 3—3 of Figure 1;

Figure 4 is a perspective view showing the sleeve bearing half-shell constructed in accordance with the subject invention;

Figure 5 is a side elevational view of the sleeve bearing half-shell shown in Figure 4 in the free state;

Figure 6 is a cross-sectional view taken substantially along line 6—6 of Figure 5;

Figure 7 is a side elevational view of the half-shell shown in Figures 4 and 5 with the parting faces moved radially inwardly from the free state, and

Figure 8 is a cross-sectional view taken substantially along line 8—8 of Figure 7.

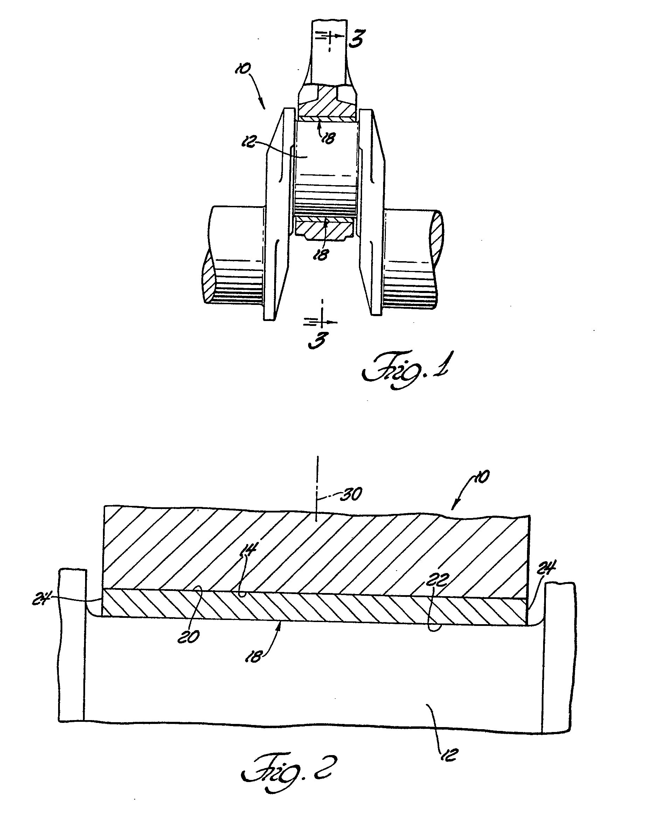

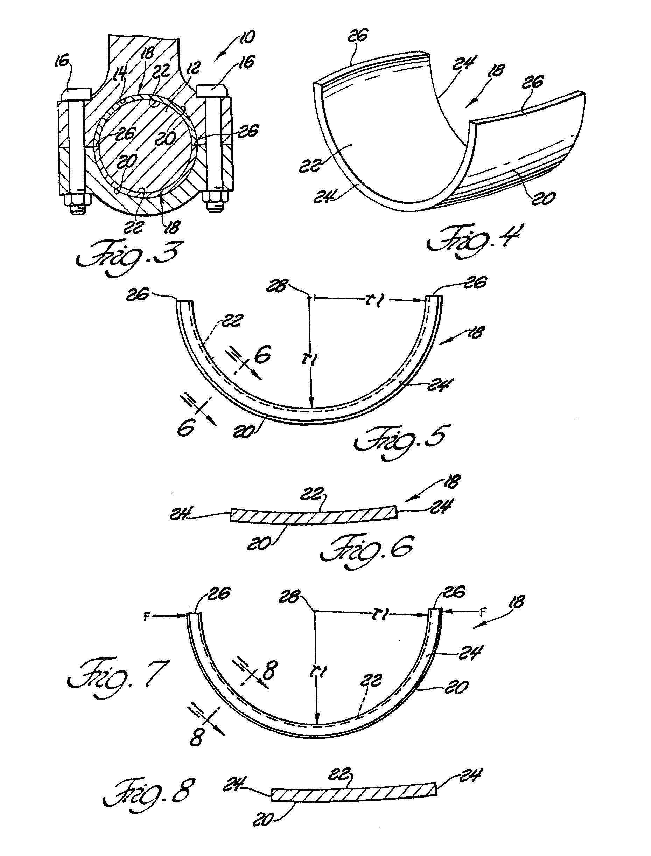

A journalled bearing assembly including two sleeve bearing half-shells constructed in accordance with the subject invention is generally shown at 10 in Figures 1, 2 and 3.

The journalled bearing assembly 10 includes a crank shaft having a journalled portion 12 as is well known in the art. There is also included a piston rod including clamping means defining a bearing pocket 14. The upper portion of the bearing pocket is defined in the lower end of the connecting rod and the lower portion of the bearing pocket is defined by the cap which, together with the bolts 16, define a clamping means.

The assembly 10 also includes a sleeve bearing defined by the sleeve bearing half-shells generally indicated and shown at 18 in all of the Figures.

Referring more particularly to Figures 4 to 8, each sleeve bearing half-shell 18 is of a generally semicircular configuration and has an outer bearing back surface 20 and an inner bearing surface 22 for engaging the journalled member or portion 12 of the shaft. The surfaces 20 and 22 extend axially, i.e. along the central axis of the cylindrical or semi-circular half-shells 18, between laterally disposed or axially spaced opposite ends 24. The surfaces 20 and 22 also extend circumferentially between the oppositely disposed parting faces 26. The half-shell is bowed axially between the ends 24 with the bearing surface 22 being concave and the outer bearing back surface 20 being convex while in the free unstressed state, as particularly illustrated in Figures 4, 5 and 6. The concave bearing surface 22 and the convex outer surface 20 extend from parting face 26 to parting face 26. In other words, the concave and convex surfaces extend a complete 180° between the opposite extremites of the half-shell 18.

As illustrated in Figure 5, the half-shell 18 extends about an axial imaginary centre 28 and the terminal portions adjacent the parting faces 26 are on a longer radius from the axial centre 28 than the radius $r_1$ of the central portion disposed centrally between the parting faces 26 while the half-shell is in the free unstressed state, i.e. with no external forces applied thereto. It is normal that the portions of the half-shell at the parting faces be spread apart in the free state and must be moved together for insertion into a bearing pocket so that the half-shell will tend to spring apart when in the bearing pocket and frictionally be retained within the bearing pocket.

As is known in the art, a sleeve bearing has a gauge diameter and that is the diameter of the bore or bearing pocket in which the bearing is to be disposed. Figure 7 shows the bearing sleeve 18 in the gauge diameter configuration. In other words, as illustrated in Figure 7, the terminal portions adjacent the parting faces 26 have been moved together to a position where the terminal portions adjacent the parting faces 26 are on a radius $r_1$ equal to the radius of the central and remaining portions of the semi-circular bearing sleeve 18. When the bearing sleeve is in the position illustrated in Figure 7, the concave and convex surfaces 22 and 20 are less concave and less convex than when in the free state illustrated in Figure 5, but remain concave and convex. Thus, when a pair of half-shells 18 are disposed about a journalled member 12 with the parting faces 26 of one half-shell abutting the parting faces 26 of the other half-shell and the bearing surfaces 22 in engagement with the journalled member, but before the bolts 16 are tightened, the surfaces 20 and 22 remain convex and concave respectively.

However, when the bolts 16 are tightened to apply radial forces to the half-shells 18, the concave and convex surfaces are forced into a straight configuration axially between the ends 24 thereof as illustrated in Figure 2 so that the stresses in the half-shells 18 are greater along the circumferential centre line 30 than along the axially spaced circumferential portions adjacent the ends 24 whereby the seating pressure between the bearing sleeve outer surface 20 and the pocket 14 is greater along the circumferential centre line 30 of the outer surface 20 than along the portions of the outer surface 20 adjacent the ends 24. Although the bearing sleeve will be straight between the ends 24 as illustrated in Figure 2, there will be greater bearing contact or radial forces between the outer surface 20 of the sleeve and the pocket 14 at the central portion thereof than at the axially outwardly portions because the ends 24 have been moved upwardly into a straight position and retain the tendency to move radially inwardly and, therefore, there is less seating pressure or contact pressure between the axially outward portions of the outer surface 20 and the pocket than at the centre portions. Consequently, any oil that might be between the outer surface 20 and the pocket 14 will follow the path of least resistance which would be axially outwardly from the centre and out the ends 24 of the sleeve bearing because there is gradually less pressure between the outer surface 20 and the pocket 14 in an axial direction. Therefore, any undesirable contaminants will flow axially outwardly of the ends 24 between the outer surface of the bearing sleeve 20 and the pocket 14 when the bearing is operating in its operating environment.

**Claims**

1. A sleeve bearing half-shell of a generally semi-circular configuration and having an outer surface (20) and an inner bearing surface (22) adapted to engage a journalled member (12), said surfaces (20, 22) extending axially between laterally spaced opposite ends (24) and circumferentially between oppositely disposed parting faces (26), the half-shell being characterised in that it is bowed in axial section between said ends with the bearing surface (22) being concave and the outer surface (20) being convex while in the free unstressed state.

2. A bearing half-shell according to claim 1 characterised in that the concave and convex surfaces (20, 22) extend from parting face (26) to parting face (26).

3. A bearing half-shell according to claim 2 characterised in that it extends about an axial centre (28) and the terminal portions adjacent said parting faces (26) are on a longer radius ($r_2$) from said axial centre (28) than the radius ($r_1$) of the central portion between the parting faces (26) while in the free unstressed state.

4. A bearing half-shell according to claim 3 characterised in that the concave and convex surfaces (20, 22) are respectively less concave and less convex (while remaining respectively concave and convex) when the terminal portions adjacent the parting faces (26) are moved together to a position where the terminal portions are on a radius ($r_1$) equal to the radius ($r_1$) of the central and remaining portions.

5. A journalled bearing assembly comprising a shaft having a journalled portion (12), two half-shells (18) defining a bearing sleeve disposed about the journalled portion (12) with parting faces (26) of one half-shell (18) abutting parting faces (26) of the other half-shell (18) and inner bearing surfaces (22) in engagement with the journalled portion (12), clamping means having a bearing pocket (14) in engagement with outer surfaces (20) of said half-shells (18) and applying radial forces to the half-shells (18), the bearing assembly being characterised in that each half-shell (18) is as claimed in any one of the preceding claims and in that the radial forces applied by the clamping means are such as to force the concave (22) and convex (20) surfaces of the half-shells (18) into a substantially straight configuration axially between the ends (24) thereof.

6. A method of forming a journalled bearing assembly comprising the steps of forming two semi-circular half-shells (18) each with an outer surface (20) and an inner bearing surface (22) with the surfaces extending axially between laterally spaced opposite ends (24) and circumferentially between oppositely disposed parting faces (26), placing the half-shells (18) together with the parting faces (26) abutting to define a bearing sleeve in a bearing housing (14) engaging the outer surfaces (20) thereof, the method being characterised in that the two half-shells (18) are each formed with the bearing surface (22) being concave and the outer surface (20) being convex between the ends (24) while in the free unstressed state in accordance with any one of claims 1 to 4, and in that radial forces are applied to the half-shells (18) in the bearing housing (14) to force the concave (22) and convex (20) surfaces into a substantially straight configuration axially between the ends (24) thereof.

## Patentansprüche

1. Gleitlager-Halbschale von im wesentlichen halbkreisförmiger Ausbildung, mit einer äußeren Fläche (20) und einer inneren, an einem Wellenzapfen (12) anliegenden Lagerfläche (22), wobei sich diese Flächen (20, 22) in axialer Richtung zwischen einander im Abstand gegenüberliegenden Endflächen (24) und in Umfangsrichtung zwischen Trennflächen (26) erstrecken, dadurch gekennzeichnet, daß im freien unbelasteten Zustand der Halbschale (18) deren Lagerfläche (22) im Querschnitt zwischen den Endflächen (24) konkav und deren äußere Fläche (20) konvex gekrümmt ist.

2. Gleitlager-Halbschale nach Anspruch 1, dadurch gekennzeichnet, daß sich die konkave und die konvexe Fläche (20, 22) von Trennfläche (26) zu Trennfläche (26) erstrecken.

3. Gleitlager-Halbschale nach Anspruch 2, dadurch gekennzeichnet, daß die Halbschale (18) sich um ein axiales Zentrum* erstreckt und daß im unbelasteten Zustand die zu den Trennflächen (26) benachbarten Endabschnitte einen größeren Radius $(r_2)$ zu diesem Zentrum aufweisen als der Radius $(r_1)$ des zwischen den Trennflächen liegenden Mittelabschnittes. *(28).

4. Gleitlager-Halbschale nach Anspruch 3, dadurch gekennzeichnet, daß die konkave und die konvexe Fläche (20, 22) geringer konkav bzw. konvex werden, jedoch konkav bzw. konvex bleiben, sobald die den Trenflächen (26) benachbarten Endabschnitte gegeneinander in eine Position bewegt werden, in der der Radius $(r_2)$ der Endabschnitte die gleiche Größe wie der Radius $(r_1)$ der Mittel- und verbleibenden Abschnitte aufweist.

5. Wellenzapfenlager-Anordnung mit einer ein Lagerzapfenteil (12) aufweisenden Welle, zwei eine das Lagerzapfenteil (12) umfassende Laufbuchse bildende Halbschalen (18) mit Trennflächen (26), wobei die eine Halbschale (18) mit ihren Trennflächen (26) auf den Trennflächen (26) der anderen Halbschale (18) aufliegt, und mit einer inneren, in Anlage mit dem Lagerzapfenteil (12) befindlichen Lagerfläche (22), mit Verbindungsmitteln mit einer das Lager aufnehmenden Aussparung (14), die in Anlage mit der äußeren Fläche (20) der Halbschalen (18) sind und radiale Kräfte auf die Halbschalen ausüben, dadurch gekennzeichnet, daß die Halbschalen (18) nach einem oder mehreren der Ansprüche 1 bis 4 ausgebildet sind, und daß die von den Verbindungsmitteln ausgeübten radialen Kräfte von solcher Art sind, daß die konkaven (22) und die konvexen Flächen (20) der Halbschalen (18) in eine im wesentlichen geradlinige Konfiguration axial zwischen ihren Endflächen (24) gezwungen werden.

6. Verfahren zur Herstellung einer Wellenzapfenlager-Anordnung durch Formen zweier halbkreisförmiger Halbschalen (18) mit je einer äußeren Fläche (20) und mit einer inneren Lagerfläche (22), die sich in axialer Richtung zwischen einander im Abstand gegenüberliegenden Endflächen (24) und in Umfangsrichtung zwischen einander gegenüberliegenden Trennflächen (26) erstrecken, durch Zusammenfügen der Halbschalen (18), bis die Trennflächen (26) aneinanderstoßen, um innerhalb einer die äußeren Flächen (20) umfassenden Ausnehmung (14) eine Laufbuchse zu bilden, dadurch gekennzeichnet, daß die beiden Halbschalen (18) so geformt werden, daß die Lagerflächen (22) im freien unbelasteten Zustand konkav und die äußeren Flächen (20) konvex zwischen den Endflächen (24) sind in Übereinstimmung mit den Merkmalen gemäß einem oder mehreren der Ansprüche 1 bis 4, und daß radiale Kräfte auf die in der Ausnehmung (14) befindlichen Halbschalen (18) ausgeübt werden, um die konkaven (22) und die konvexen Flächen (20) der Halbschalen (18) in eine im wesentlichen geradlinige Konfiguration axial zwischen ihre Endflächen (24) zu zwingen.

## Revendications

1. Demi-coquille de palier à coussinet, de configuration sensiblement semi-circulaire et comportant une surface extérieure (20) et une surface de portée intérieure (22) prévue pour venir en contact avec une pièce (12) supportée en rotation, les dites surfaces (20, 22) s'étendant axialement entre des extrémités opposées (24) latéralement espacées et circonférentiellement entre des faces de séparation (26) opposées, la demi-coquille étant caractérisée en ce qu'elle est arquée en section axiale entre les dites extrémités, la surface de portée (22) étant concave et la surface extérieure (20) étant convexe, à l'état de repos en l'absence de contrainte.

2. Demi-coquille de palier suivant la revendication 1, caractérisée en ce que les surfaces concave et convexe (20, 22) s'étendent d'une face de séparation (26) à l'autre face de séparation (26).

3. Demi-coquille de palier suivant la revendication 2, caractérisée en ce qu'elle s'étend autour d'un axe central (28) et en ce que les parties terminales adjacentes aux faces de séparation (26) sont sur un rayon $(r_2)$ plus long, par rapport au dit axe central (28), que le rayon

($r_1$) de la partie centrale entre les faces de séparation (26), à l'état de repos en l'absence de contrainte.

4. Demi-coquille de palier suivant la revendication 3, caractérisée en ce que les surfaces concave et convexe (20, 22) sont respectivement moins concave et moins convexe (tout en restant respectivement concave et convexe) lorsque les parties terminales ajdacentes aux faces de séparation (26) sont rapprochées l'une de l'autre à une position dans laquelle les parties terminales sont sur un rayon ($r_1$) égal au rayon ($r_1$) des parties centrales restantes.

5. Ensemble de palier avec tourillon, comprenant un arbre qui comporte un tourillon (12), deux demi-coquilles (18) qui définissent un coussinet de palier disposé autour du tourillon (12), les faces de séparation (26) d'une demi-coquille (18) étant en butée contre les faces de séparation (26) de l'autre demi-coquille (18) et les surfaces de portée intérieures (22) étant en contact avec le tourillon (12), des moyens de serrage qui comprennent un logement de palier (14) en contact avec les surfaces extérieures (20) des demi-coquilles (18) et qui exercent des forces radiales sur les demi-coquilles (18), l'ensemble de palier étant caractérisé en ce que chaque demi-coquille (18) est telle que revendiqué dans l'une quelconque des revendications précédentes et en ce que les forces radiales exercées par les moyens de serrage sont telles qu'elles obligent les surfaces concaves (22) et convexe (20) des demi-coquilles (18) à prendre une configuration sensiblement rectiligne axialement entre leurs extrémités (24).

6. Procédé d'obtention d'un ensemble de palier avec tourillon, comprenant les opérations d'obtention de deux demi-coquilles semi-circulaires (18) qui comportent chacune une surface extérieure (20) et une surface de portée intérieure (22), ces surfaces s'étendant axialement entre des extrémités opposées (24) latéralement espacées et circonférentiellement entre des faces de séparation (26) disposées en opposition, de mise en place des demi-coquilles (18) ensemble, les faces de séparation (26) étant en butée pour définir un coussinet de palier, dans un logement de palier (14) en contact avec leurs surfaces extérieures (20), le procédé étant caractérisé en ce que les deux demi-coquilles (18) sont formées chacune avec la surface de portée (22) concave et la surface extérieure (20) convexe entre les extrémités (24), à l'état de repos en l'absence de contrainte, conformément à l'une quelconque des revendications 1 à 4, et en ce que des forces radiales sont appliquées aux demi-coquilles (18) dans le logement de palier (14) pour obliger les surfaces concave (22) et convexe (20) à prendre une configuration sensiblement rectiligne axialement entre leurs extrémités (24).

Fig. 1

Fig. 2

1

Fig.3

Fig.4

Fig.5

Fig.6

Fig.7

Fig.8